# EUROPEAN PATENT SPECIFICATION

(11) **EP 1 395 014 B1**
(45) Date of publication and mention of the grant of the patent: **14.06.2006**
(21) Application number: 02019052.6
(22) Date of filing: 27.08.2002
(51) Int. Cl.: H04L 29/06, H04L 29/08

(54) **A method of transmitting data streams with data segments of variable length**
Verfahren zur Übertragung von Datenströmen mit Datensegmenten variabler Länge
Procédé de transmission de données en continue avec de segments de données à longeur variable

(43) Date of publication of application: 03.03.2004
(73) Proprietor: MATSUSHITA ELECTRIC INDUSTRIAL CO., LTD., Kadoma-city, Osaka 571-8501 (JP)
(72) Inventor: Rey, José Luis, Monzastr. 4c, 63225 Langen (DE); Burmeister, Carsten, Monzastr. 4c, 63225 Langen (DE); Hakenberg, Rolf, Monzastr. 4c, 63225 Langen (DE)
(74) Representative: Grünecker, Kinkeldey, Stockmair & Schwanhäusser Anwaltssozietät

(56) References cited:
- EP-A- 0 786 885
- WO-A-02/052859
- WO-A-02/054284
- CONKLIN G J ET AL: "VIDEO CODING FOR STREAMING MEDIA DELIVERY ON THE INTERNET" IEEE TRANSACTIONS ON CIRCUITS AND SYSTEMS FOR VIDEO TECHNOLOGY, IEEE INC. NEW YORK, US, vol. 11, no. 3, March 2001 (2001-03), pages 269-281, XP001093477 ISSN: 1051-8215
- HUI J Y ET AL: "CLIENT-SERVER SYNCHRONIZATION AND BUFFERING FOR VARIABLE RATE MULTIMEDIA RETRIEVALS" IEEE JOURNAL ON SELECTED AREAS IN COMMUNICATIONS, IEEE INC. NEW YORK, US, vol. 14, no. 1, 1996, pages 226-237, XP000548824 ISSN: 0733-8716
- JONGWON KIM ET AL: "TCP-friendly Internet video streaming employing variable frame rate encoding and interpolation" IEEE TRANSACTIONS ON CIRCUITS AND SYSTEMS FOR VIDEO TECHNOLOGY, vol. 10, no. 7, October 2000 (2000-10), pages 1164-1177, XP002226167 ISSN: 1051-8215

## Description

The present invention relates to a method of transmitting data streams between a sending host and a receiving host using a transport protocol such as TCP.

In network communications between a sending host and a receiving host, the transmission of data packets is mostly done on a best-effort basis. In the communication link, the available bandwidth and the current link conditions vary and hence, the end hosts must be provided with mechanisms to probe and adjust themselves to the current link conditions.

With the development of 3rd generation networks, so-called streaming applications are gaining importance. Streaming applications are understood as a continuous stream of data, e.g. video or audio data which is typically sensitive to time delays. In order that the user will be able to receive multimedia data streams on a portable receiver, for example a mobile phone, several requirements on the transport mechanism will be imposed in order that the delivered data meets with the resulting time constraints. These constraints are difficult to meet in a best-effort environment, which is subject to bandwidth variations and delays.

To cope with the problem of bandwidth adaption, it is common praxis to make several data streams with different encoding rates but same content available at the sending host. According to the available bandwidth, it is then switched between the data streams in order to adjust the rate to the available bandwidth. In other words, multi-rate content streams at the sending host are transmitted and switching operations between streams are performed depending on the available bandwidth. The current stream is forwarded to the receiving host in one piece and consequently, for every switching operation, the ongoing connection must be torn down and a new one must be set up. As a result, this operation is inefficient and decreases the data throughput.

Alternatively, it is possible to transmit only one stream of data to the receiving host and to discard data packets based on priority and time constraints. However, this leads to a loss of data and is therefore not an optimal solution. "Video Coding for Streaming Media Delivery on the Internet", by Conklin G J FT AL, IEEE Transactions on Circuits Systems for Video Technology, IEEE Inc. New York, US, vol. 11, no. 3, March 2001 (2001-03) pages 269-281, XPOO1 093477 ISSN: 1051-8215, relates to internet streaming media delivery networks for streaming media in a server-client transaction over a transport protocol, such as TCP-and UDP-based network protocol. The document mentions the need for scalable/adaptive streaming involving the idea of having multiple versions of the same content encoded for specific classes of the internet audience. In order to address the possibility of dynamic changes in channel bandwidth and loss statistics the server implements a mechanism where it gets notified that packets are delivered to the clients slower than real-time and skips transmission of some packets in order to prevent the players from rebuffering or losing connections.

In the system described in this document the encoder is used to produce multiple representations (or data streams) of the original content optimized for various conditions. During a streaming session, a client monitors the actual bandwidth and loss characteristic of its connection and instructs the server to switch to the stream whose transmission over the current channel would yield the minimum distortion in the reconstructed signal.

EP-A-0 786 885 relates to a method for packet transmission from a transmitting end to a receiving end wherein data packets are formed from a bit stream and sent through a packet network to a receiving buffer at the receiving end where the data is stored and read out. The network described according to a preferred embodiment is specified as an Asynchronous Transfer Mode (ATM) network in which a data packet has a certain standard size or length consisting of a payload part and a heading.

WO 02 054284 A discloses a method for transmission of video information between HTTP servers and clients over the internet, wherein the video information is stored in the server as a video file consisting of packet-divided video streams. The streams are compression encoded with different average bit rates, which cover the expected channel bit rates for transmission to the client. Each video stream is divided into data packets having varying lengths, each comprising a header and a payload.

For the segmentation of the stream into packets of different lengths needs to be considered that on the one hand, larger packets result in less packet overhead and on the other hand, a segmentation into large packets will increase the interval during which the switching between the streams may be performed.

The object subject to the present invention is to minimize the latency of the switching operation and to ensure fast recovery from an incorrect switching decision.

This object is solved according to the present invention with a method as set forth in claim 1. Preferred embodiments of the method are subject to various dependent claims.

The method of the present invention supposes the existence of multi-rate content data streams at the sending host. With the method of the present invention, it is possible to quickly switch between data streams that are variably segmented at the application layer as required during transmission. Instead of using data streams of fixed segment length, the data segments given to the socket are made smaller before, during and after the switching. For each content several video streams encoded with different rates are stored at the video server. Under normal sending conditions, i.e. the transmission has reached some equilibrium where the bandwidth is enough and the losses are not dominating, the video content is passed to the sending TCP socket in segments of the same size (irregardless of the stream encoding rate, the segment size is a function of the link, not of the encoding rate). Only when the server is notified (or knows by other means) that a stream switch might be needed, then it reduces the size of these segments.

Further, with the method of the present invention, it is neither necessary to modify the originally encoded data at the sending host or to modify the transport protocol nor to introduce additional control messages, making the method easy to implement.

The switching is performed between data streams of different rate and the variable segmentation of the data streams is performed around the switching instant. Hence, a quick stream switching from the old to the new data stream can be performed. Further, preferably, the segmentation during, before or after the switching instance is made finer, such that the switching operation is more resilient to an incorrect decision and enables a quicker, further switching operation.

Advantageously, the step of switching between streams involves a feedback message (e.g. an RTSP command) i.e. communication between hosts when a switching operation is needed and when to make the necessary preparations therefor, for example, to start with finer segmentation.

It is furthermore of advantage if the feedback message includes at least one of the parameters, which comprise the length of data segment, an identifier of the data to be sent or a stream control command which makes the operation smoother and less susceptible to data losses.

Preferably, the length of the data segments is gradually increased after a switching instant to reduce interface communication, i.e. between application and TCP socket.

The present invention will be more fully understood from the following detailed description with reference to the accompanying drawings which show:
- **Figure 1:**: the basic architecture of a sending host and a receiving host connected by a communications network in which the method subject to the present invention can be performed,
- **Figure 2:**: a block diagram of a server architecture as the sending host in which the method of the present invention is performed, and
- **Figure 3:**: a block diagram of a client architecture.

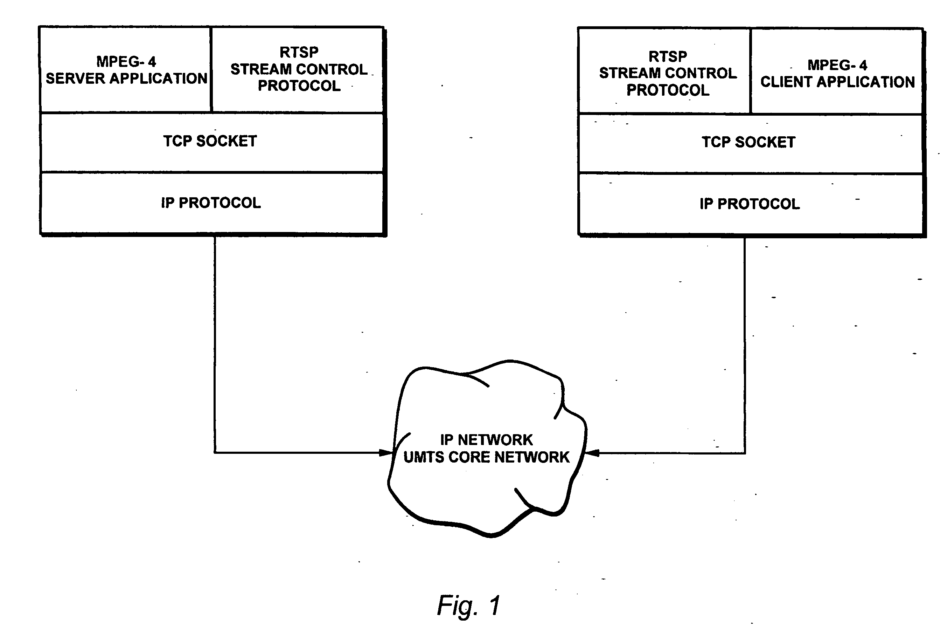

Figure 1 illustrates the basic architecture of a communications network for connecting a video server as a sending host to a video client acting as a receiving host. The communications network is, for example, a UMTS core network, an external network, such as the internet or an internal intranet over which the server and the client communicate by means of a transport protocol. As transport protocol TCP is selected as an example, but it is clear to a skilled person that any other transport protocol for transmitting data can be employed.

In a more general way, it will now be explained how TCP handles the exchange of data between the server and the client.

First of all, the video server needs to transfer its data to the protocol and tell it to send same to the client. To progressively read and send data, the protocol uses a kind of buffer with added functionalities, a so-called TCP socket. Generally, sockets are unequivocally identified by the IP addresses of the correspondents, the protocols and ports which are used. Once a connection between two sockets is established, the communication can be controlled by use of interface calls, which, for example may comprise "create a socket", "bind a socket to a transport address", "accept" or "close a connection", "send", "receive" or "write" data between the sender and the receiver.

Wide-spread socket implementations are UNIX BSD 4.2 and Windows Winsock 2.0, where equivalent interface calls are implemented.

Each interface call has parameters, e.g. for the "send" call, parameters of relevance are the socket descriptor, the identifier of the data to be sent and the length of the data stream. Once a data stream is passed in one call, no single bit of this data stream can be modified. The only way to abort transfer of this data stream is to break down the connection.

Nevertheless, in order to close the connection, the application must explicitly issue a "close" call. Interface calls can be queued as, for example, in FTP. When asked for a file, the FTP server usually issues two interface calls for this transmission, namely a "send" call indicating the socket, the identifier of the data stream and the length thereof and a "close" call identifying the socket. The two interface calls are put into the queue and when the "send" call is completed, the connection is irreversibly broken down because the "close" call was next in the queue.

Alternatively, for example, in case of TELNET, the connection is established and the socket is set to wait for incoming data, i.e. commands typed on the keyboard.

Of course, the application can be configured such that the server only issues a send call and waits for the client to close. However, this is uncommon.

Additionally, it is assumed that the TCP protocol provides a means for asynchronously signaling certain information about events in the socket. Often in the specification, the information will be an error message. In other cases, there will be information relating to the completion of processing a SEND or RECEIVE or another interface call.

Referring again to Figure 1, the video server provides, e.g. an MPEG 4 compressed data stream, i.e. a given video content, which is made available to the TCP socket in the form of mono-rate or multi-rate streams. Multi-rate streams are defined for the purpose of this and the following description, as one or several data streams with the same video content at different encoding rates. The MPEG data streams are forwarded to the TCP socket. Subsequently, by means of an IP protocol, data is transmitted to the video client. A stream control protocol, e.g. RTSP, should be used to perform such operating as PLAY, PAUSE or STOP the transmission.

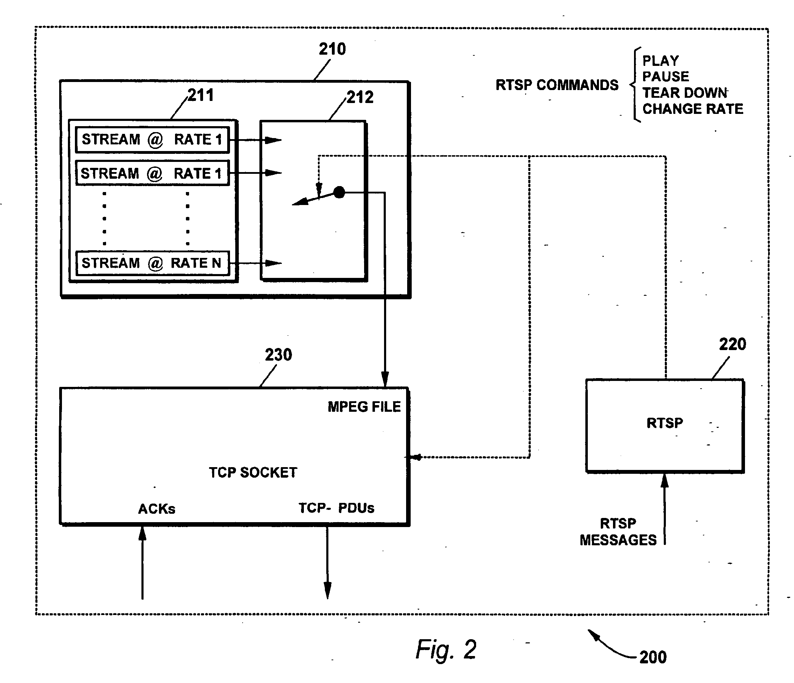

With reference to Figure 2, which shows the basic architecture of a video server 200, at the MPEG server application 210, video content is made available in a buffer 211 at different coding rates. A switch 212, which receives stream control RTSP commands from RTSP block 220, such as "Play", "Pause", "Tear down" or "Change rate", selects one of the data streams which is forwarded to the TCP socket 230 in form of an MPEG file.

It is clear to a skilled person that other stream control protocols than RTSP could be used at the server and the client. The stream control protocol typically instructs to perform play, forwarding, rewinding, pause or stop functions. Additionally, if multi-rate content is available, switch to a higher or lower encoding rate can be instructed.

Once a server has received a request for a file containing a chosen content encoded at a desired rate, the server application forwards each of the segments, in which the file was previously segmented, one after another to the TCP socket by means of consecutive interface calls, e.g. consecutive SEND calls. Unlike in current FTP applications, the connection is not torn down after each data transmission process is completed. The data connection remains open, so that there is no need to build up a new connection every time a segment is transmitted. Following this, the TCP socket forms with these segments packet data units (PDUs) for transmission to the client, as it finds most appropriate.

Upon establishing a connection, the TCP socket selects a segment size for the data streams which the server finds most appropriate for the link under consideration of the channel bandwidth and starts transmitting.

Initially, the size of the segments is made small before, during and after a switching operation in order to avoid a large waiting time before a further switch operation can be performed in case the previous switch decision was incorrect. Subsequently, the size of the data segments can be increased gradually throughout the connection time.

Eventually, when there is a change in the available link bandwidth, the video client shall indicate a possible switch operation by means of, for example, an RTSP message and the server will start doing finer segmentation. Hence, the server switches between data streams of different encoding rates. This is done based on initial information and subsequently controlled by feedback from the client. Alternatively, this could be determined by the server, which would, however, impose processing requirements on the server. Also a combination of control mechanisms at the server and the client is possible. How the server or the client exactly makes the decision to perform a switching operation or indicates a possible anticipated switch is out of the scope of the present invention.

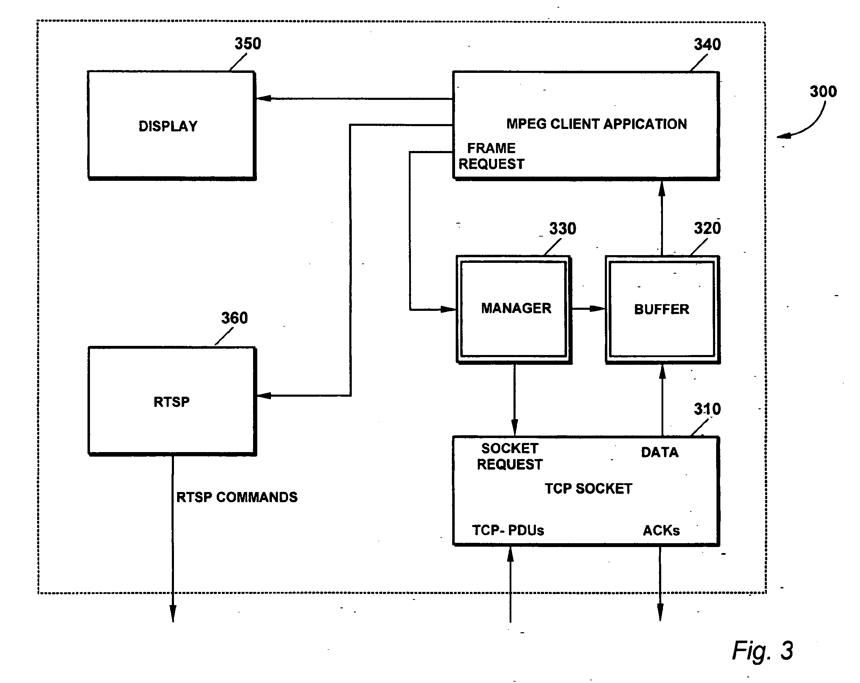

The basic architecture of a TCP streaming client 300 is illustrated in Figure 3. The client 330 typically consists of a TCP socket 310, an application layer buffer 320 and a buffer manager 330 for the application layer buffer.

The client 300 processes the data segments of variable length as they come. In response thereto, it sends ACKs and performs flow control in order to prevent an overflow of the TCP socket 310 while extracting the maximum bit rate possible from the link. To do this, the TCP socket indicates to the server, with each ACK, how much data it can receive until the socket is full using a window field in the header of the TCP protocol. If needed, the TCP client signals a zero-window telling the server to enter a "Persist" mode wherein no data is sent until the client allows to do so while the connection is maintained. The Persist mode and the signaling of a window field are standard functionalities of the TCP protocol. When the TCP circuit has capacity for more data, it signals this to the server. Streaming control commands are signalled to the server by means of RTSP commands.

The application layer buffer 320, also called "play-out buffer" receives data from the socket and transmits same to the MPEG client application 340. The manager 330 for the application layer buffer 320 receives a frame request from the MPEG client application and issues a socket request upon considering the state of the application layer buffer. The buffer manager 320 therefore insures that the bit rate with which the TCP socket 310 can deliver the new data to the application layer buffer 320 matches the bit rate at which the application layer buffer is emptied to the MPEG client application 340. The exact control mechanism of the buffer manager is out of the scope of the present invention.

Finally, from the MPEG client application, the data is transferred to a display 350 for visualization for the user.

## Claims

1. A method of transmitting data streams between a sending host and a receiving host using a transport protocol comprising the steps of:
making available data streams at the sending host in form of mono-rate or multi-rate streams,
establishing a connection between the sending host and the receiving host,
transmitting data streams of the same content with a selected encoding rate to the receiving host,
separating the data streams in data segments of variable length at the sending host before transmission, and
switching between data streams of different rate at an instant
**characterized by the following step:**
performing the variable segmentation of the data streams around the switching instant.

2. The method according to claim 1, wherein the data streams have a finer degree of segmentation during, before or after the switching instant.

3. The method according to claim 1 or 2, wherein the step of establishing a connection between the sending host and the receiving host involves an interface call.

4. The method according to claim 3, wherein the interface call includes at least one of the parameters, data segment length, an identifier of the data to be sent or a stream control command.

5. The method according to one of claims 1-4, wherein the receiving host communicates to the sending host when a stream switching is needed.

6. The method according to one of claims 1-5, wherein the sending host determines the timing of the switching instant dependent on the available bandwidth of the communication link.

7. The method according to one of claims 1-6, wherein the length of the data segments is gradually increased after a switching instant.

8. The method according to one of claims 1-7, wherein the received data streams at the receiving host are temporarily stored in an internal buffer.

9. The method according to one of claims 1-8, wherein the receiving host signals stream control commands to the sending host depending on the state of the internal buffer.

## Patentansprüche

1. Verfahren zum Übertragen von Datenströmen zwischen einem sendenden Host und einem empfangenden Host unter Verwendung eines Transportprotokolls, das die folgenden Schritte umfasst:
Verfügbarmachen von Datenströmen an dem sendenden Host in Form von Strömen mit einer Rate oder mehreren Raten,
Herstellen einer Verbindung zwischen dem sendenden Host und dem empfangenden Host,
Übertragen von Datenströmen des gleichen Inhalts mit einer ausgewählten Codierrate zu dem empfangenden Host,
Trennen der Datenströme in Datensegmente variabler Länge an dem sendenden Host vor Übertragung, und
Wechseln zwischen Datenströmen unterschiedlicher Rate in einem Zeitpunkt,
**gekennzeichnet durch** den folgenden Schritt:
Durchführen der variablen Segmentierung der Datenströme um den Umschaltzeitpunkt herum.

2. Verfahren nach Anspruch 1, wobei die Datenströme während, vor oder nach dem Umschaltzeitpunkt einen feineren Grad an Segmentierung aufweisen.

3. Verfahren nach Anspruch 1 oder 2, wobei der Schritt des Herstellens einer Verbindung zwischen dem sendenden Host und dem empfangenden Host einen Schnittstellenaufruf einschließt.

4. Verfahren nach Anspruch 3, wobei der Schnittstellenaufruf wenigstens einen der Parameter Datensegmentlänge, eine Kennung der zu sendenden Daten oder einen Strom-Steuerbefehl einschließt.

5. Verfahren nach einem der Ansprüche 1 - 4, wobei der empfangende Host dem sendenden Host mitteilt, wann eine Strom-Umschaltung erforderlich ist.

6. Verfahren nach einem der Ansprüche 1 - 5, wobei der sendende Host das Timing des Umschaltzeitpunkts in Abhängigkeit von der verfügbaren Bandbreite der Kommunikationsverbindung bestimmt.

7. Verfahren nach einem der Ansprüche 1 - 6, wobei die Länge der Datensegmente nach einem Umschaltzeitpunkt allmählich vergrößert wird.

8. Verfahren nach einem der Ansprüche 1 - 7, wobei die an dem empfangenden Host empfangenen Datenströme temporär in einem internen Puffer gespeichert werden.

9. Verfahren nach einem der Ansprüche 1 - 8, wobei der empfangende Host dem sendenden Host in Abhängigkeit vom Zustand des internen Puffers Strom-Steuerbefehle signalisiert.

## Revendications

1. Procédé de transmission de flux de données entre un hôte expéditeur et un hôte receveur en utilisant un protocole de transport comprenant les étapes de:
rendre disponibles les flux de données à l'hôte expéditeur sous la forme de flux en mono débit ou en multi débit,
établissement d'une connexion entre l'hôte expéditeur et l'hôte receveur,
la transmission de flux de données du même contenu avec un débit de codage sélectionné à l'hôte receveur,
séparation des flux de données dans des segments de données de longueur variable à l'hôte expéditeur avant la transmission, et
la commutation entre des flux de données de débits différents à un instant
**caractérisé par** l'étape suivante :
réalisation de la segmentation variable des flux de données autour de l'instant de commutation.

2. Procédé selon la revendication 1, dans lequel les flux de données ont un degré plus fin de segmentation pendant, avant ou après l'instant de commutation.

3. Procédé selon la revendication 1 ou 2, dans lequel l'étape d'établissement d'une connexion entre l'hôte expéditeur et l'hôte récepteur implique une interface d'appel.

4. Procédé selon la revendication 3, dans lequel l'interface d'appel comprend au moins un des paramètres, longueur de segment de données, un identificateur des données à envoyer ou une commande de contrôle de flux.

5. Procédé selon l'une des revendications 1 à 4, dans lequel l'hôte récepteur communique avec l'hôte expéditeur lorsqu'une commutation de flux est nécessaire.

6. Procédé selon l'une des revendications 1 à 5, dans lequel l'hôte expéditeur détermine la base de temps de l'instant de commutation selon la largeur de bande disponible de la liaison de communication.

7. Procédé selon l'une des revendications 1 à 6, dans lequel la longueur des segments de données est graduellement augmentée après une instant de commutation.

8. Procédé selon l'une des revendications 1 à 7, dans lequel les flux de données reçues à l'hôte récepteur sont temporairement stockés dans un tampon interne.

9. Procédé selon l'une des revendications 1 à 8, dans lequel l'hôte récepteur signale des commandes de contrôle de flux vers l'hôte expéditeur dépendent de l'état du tampon interne.
